(19) Europäisches Patentamt
European Patent Office
Office européen des brevets

(11) **EP 2 929 179 B1**

(12) **EUROPÄISCHE PATENTSCHRIFT**

(45) Veröffentlichungstag und Bekanntmachung des Hinweises auf die Patenterteilung:
**17.10.2018   Patentblatt 2018/42**

(21) Anmeldenummer: **13799321.8**

(22) Anmeldetag: **05.12.2013**

(51) Int Cl.:
**F03D 7/02** *(2006.01)*

(86) Internationale Anmeldenummer:
**PCT/EP2013/075606**

(87) Internationale Veröffentlichungsnummer:
**WO 2014/086901 (12.06.2014 Gazette 2014/24)**

(54) **WINDENERGIEANLAGE SOWIE VERFAHREN ZUM BETREIBEN EINER WINDENERGIEANLAGE**

WIND TURBINE AND METHOD FOR OPERATING A WIND TURBINE

ÉOLIENNE ET PROCÉDÉ PERMETTANT DE FAIRE FONCTIONNER UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **05.12.2012   DE 102012222323**

(43) Veröffentlichungstag der Anmeldung:
**14.10.2015   Patentblatt 2015/42**

(73) Patentinhaber: **Wobben Properties GmbH 26607 Aurich (DE)**

(72) Erfinder:
• **STOLTENJOHANNES, Jürgen**
  **26605 Aurich (DE)**
• **BOHLEN, Thomas**
  **26624 Südbrookmerland (DE)**
• **HARMS, Harro**
  **26639 Wiesmoor (DE)**
• **BRENNER, Albrecht**
  **26607 Aurich (DE)**
• **SCHLÜTER, Rainer**
  **26607 Aurich (DE)**

(74) Vertreter: **Eisenführ Speiser Patentanwälte Rechtsanwälte PartGmbB Postfach 10 60 78 28060 Bremen (DE)**

(56) Entgegenhaltungen:
EP-A1- 1 666 723          EP-A2- 2 500 562
WO-A1-2012/085568     WO-A2-2012/136279
US-A1- 2010 014 971     US-B2- 7 118 339

**Beschreibung**

Die vorliegende Erfindung betrifft ein Verfahren zum Betreiben einer Windenergieanlage zum Erzeugen elektrischer Energie aus Windenergie. Weiterhin betrifft die vorliegende Erfindung eine entsprechende Windenergieanlage mit einem Rotor mit Rotorblättern mit einer im Wesentlichen horizontalen Drehachse.

Windenergieanlagen sind allgemein bekannt und der heutzutage am häufigsten anzutreffende Windenergieanlagentyp ist eine sogenannte Horizontalachsen-Windenergieanlage. Hier dreht ein Rotor mit Rotorblättern um eine im Wesentlichen horizontale Drehachse. Die Drehachse kann leicht geneigt sein, z.B. um wenige Grad, wird aber in der Fachwelt dennoch als Horizontalachse bezeichnet, nämlich in Abgrenzung zu gänzlich anderen Anlagentypen wie bspw. ein sogenannter Darrieus-Rotor.

Der Rotor einer solchen Horizontalachsen-Windenergieanlage überstreicht eine im Wesentlichen senkrechte Rotorebene bzw. Rotorfläche. Diese Rotorfläche erstreckt sich auch bei modernen Windenergieanlagen in vertikaler Richtung in erheblichem Maße. Jedes Rotorblatt erreicht dabei bei einer Umdrehung mit seiner Blattspitze einmal in einer 6-Uhr-Stellung den tiefsten Punkt dieser Rotorfläche und in 12-Uhr-Stellung den höchsten Punkt dieser Rotorfläche. Dieser höchste Punkt kann dabei mitunter um ein Mehrfaches höher als der tiefste Punkt liegen. Bspw. weist eine ENERCON-Windenergieanlage vom Typ E-82 einen Rotordurchmesser von 82 m auf und es gibt eine Variante, bei der die Nabenhöhe, also die Achshöhe bzw. der Mittelpunkt der Rotorfläche in der Höhe von 78 m angeordnet ist. Der tiefste Punkt liegt hier also auf einer Höhe von 37 m und dieser höchste Punkt auf einer Höhe von 119 m. Der höchste Punkt liegt somit mehr als dreimal so hoch wie der tiefste Punkt. Selbst bei größeren Nabenhöhen liegt ein erheblicher Höhenunterschied zwischen diesem tiefsten und höchsten Punkt der Rotorfläche vor.

Unter praktischen Gesichtspunkten ist zu beachten, dass der Wind ein natürliches Höhenprofil aufweist, demnach er -für relevante Höhen - mit zunehmender Höhe über Grund höher bzw. stärker ist. Der Höhenunterschied der überstrichenen Rotorfläche führt somit dazu, dass entsprechend unterschiedlich starker Wind vorliegt. Entsprechend ist der Wind am tiefsten Punkt am schwächsten und am höchsten Punkt am stärksten. Mit anderen Worten ist es so, dass Windenergieanlagen von mehr oder weniger stark ausgeprägten Scherströmungen innerhalb der atmosphärischen Grenzschicht angeströmt werden. Dies kann als Windhöhenprofil bezeichnet werden und dieses Windhöhenprofil verursacht beim Betrieb einer Windenergieanlage eine Fluktuation der lokalen Anstellwinkel am Rotorblatt, so dass unerwünschte Wechsellasten und eine inhomogene Drehmomentabgabe auftreten können. Auch verstärkte Schallemissionen durch Strömungsablösung am Rotorblatt können auftreten.

Es wird darauf hingewiesen, dass die vorliegende Betrachtung insbesondere diese Probleme durch das Windhöhenprofil betrachtet und darauf Bezug nimmt. Erschwerend können natürlich auch unterschiedlich turbulente Winde zu unterschiedlichen Betrachtungen führen. Diese Probleme werden hier jedoch ausgeklammert, weil sie häufig vernachlässigt werden können bzw. soweit sie nicht vernachlässigt werden können, bedürfen sie einer gesonderten Betrachtung, die hier nicht Gegenstand ist.

Um dieses Problem bzw. diese Probleme zu adressieren ist bereits in der US 6,899,523 ein Blattdesign vorgeschlagen worden, dass unterschiedliche Abschnitte aufweist, die für unterschiedliche Schnelllaufzahlen ausgelegt sind. Aus der US 2010/0290916 ist ein sogenanntes integrierendes Blattdesign bekannt, bei dem das Rotorblatt so entworfen ist, dass es über einen möglichst großen Anstellwinkel bzw. Anströmwinkel noch eine befriedigende Gleitzahl aufweist. Es wurde somit dort vorgeschlagen, möglichst nicht auf einen einzelnen möglichst optimalen Anstellwinkel das Blatt zu optimieren, sondern lieber einen etwas größeren Bereich, bezogen auf den Anstellwinkel, zu ermöglichen, selbst wenn die Gleitzahl für einen optimalen Anstellwinkel nicht mehr ganz optimal sein sollte.

Mit zunehmender Größe von Windenergieanlagen können jedoch auch die Unterschiede durch das Windhöhenprofil und damit entsprechende Probleme zunehmen.

Das Deutsche Patent- und Markenamt hat in der Prioritätsanmeldung zu vorliegender Anmeldung folgenden Stand der Technik recherchiert: US 6,899,523 B2, US 2010 / 0 074 748 A1, US 2010 / 0 078 939 A1, US 2010 / 0 092 288 A1, US 2010 / 0 290 916 A1 und BOSSANYI, E. A.: Individual Blade Pitch Control for Load Reduction. In: Wind Energy, Vol. 6, 2003, S. 119-128. - Online-ISSN: 1099-1824.

US 7 118 339 B2 offenbart ein Verfahren nach dem Oberbegriff des Anspruchs 1.

Der vorliegenden Erfindung liegt somit die Aufgabe zugrunde, zumindest eines der genannten Probleme zu adressieren. Insbesondere soll eine Lösung vorgeschlagen werden, bei der bedingt durch das Windhöhenprofil entstehende Lasten reduziert werden, Schallemissionen reduziert werden und/oder Erträge erhöht werden. Zumindest soll eine alternative Lösung vorgeschlagen werden.

Erfindungsgemäß wird ein Verfahren nach Anspruch 1 vorgeschlagen.

Somit wird eine Windenergieanlage betrieben, die einen aerodynamischen Rotor mit Rotorblättern mit einer im Wesentlichen horizontalen Drehachse aufweist, um elektrische Energie aus Windenergie zu erzeugen.

Die Windenergieanlage wird hierbei so ausgerichtet, dass die Azimutposition von einer Ausrichtung genau in den Wind um einen Azimutausgleichswinkel abweicht. Bisher wurden Windenergieanlagen mit ihrer Azimutposition genau in den Wind ausgerichtet, um den Wind auch optimal ausnutzen zu können. Es wird nun aber vorgeschlagen, die Azimutposition oder Azimutausrichtung der Windenergieanlage bewusst gegenüber dieser optimalen Ausrichtung zum Wind zu verstellen, nämlich um den Azimutausgleichswinkel. Es wurde erkannt, dass durch diese Azimutverstellung Wechsellasten auf den Rotorblättern, bedingt durch das Windhöhenprofil, reduziert werden können. Die Rotorblätter bewegen sich dann nicht mehr vollständig rechtwinklig zum Wind, sondern leicht schräg dazu. Bei geeigneter Vornahme dieser Azimutverstellung bedeutet das, dass sich jedes Rotorblatt durch diese schräge Bewegung zum Wind im oberen Teil der Rotorfläche etwas vom Wind weg bewegt und dann im unteren Teil etwas zum Wind hin bewegt.

Gemäß einer Ausführungsform wird vorgeschlagen, dass die Windenergieanlage bezogen auf eine Sicht von der Windenergieanlage zum Wind nach rechts von der Ausrichtung in den Wind abweicht bzw. dass sie in ihrer Azimutposition bezogen auf eine Sicht von oben auf die Windenergieanlage im Uhrzeigersinn zu der Ausrichtung in den Wind abweicht. Die Windenergieanlage wird also in ihrer Azimutposition nach rechts verstellt. Dies hängt mit der Drehrichtung des Rotors zusammen, der üblicherweise aus Sicht der Windenergieanlage links herum dreht bzw. von einer Sicht von vorne, nämlich bestimmungsgemäß aus Windrichtung auf die Windenergieanlage rechts herum dreht. Sollte eine Windenergieanlage abweichend zu dieser üblichen Drehrichtung aus Sicht der Windenergieanlage rechts herum drehen bzw. von einer Sicht von vorne, nämlich bestimmungsgemäß aus Windrichtung auf die Windenergieanlage links herum drehen, ist auch die vorgeschlagene Azimutverstellung entsprechend anzupassen.

Ein Azimutausgleichswinkel im Bereich von 0,5° bis 3,5° kann bereits zu vorteilhaften Effekten, nämlich einer Vergleichmäßigung der Blattbelastung, also einer Verringerung der Wechsellasten führen. Vorzugsweise liegt dieser Bereich bei 1° bis 3° und besonders wird ein Bereich von 1,5° bis 2,5° vorgeschlagen, der in Untersuchungen zu sehr positiven Effekten geführt hat. Solche vergleichsweise geringen Werte haben auch den Vorteil, dass mit wenig Ertragseinbuße durch die nichtoptimale Einstellung des Azimutwinkels gerechnet werden muss. In erster Näherung wird eine Abhängigkeit des Ertrags zur Einstellung des Azimutwinkels zum Wind durch eine Kosinusfunktion beschrieben. Das heißt für den Winkel 0, also einer optimalen Ausrichtung, liegt der maximale Wert von 1 vor, der sich bei geringen Winkelabweichungen zu Null kaum verringert, wie aus der Kosinusfunktion bekannt ist.

Gemäß einer Ausführungsform wird vorgeschlagen, dass der Azimutausgleichswinkel abhängig von der vorherrschenden Windgeschwindigkeit gewählt wird. So kann bspw. bei schwachem Wind ein kleinerer Azimutausgleichswinkel gewählt werden, um die Windenergieanlage dann nur weniger von einer optimalen Ausrichtung direkt in den Wind zu verstellen, weil bspw. bei schwachen Winden die absolute Belastung geringer ist und daher auch Wechsellasten eine geringere Auswirkung haben, insbesondere weniger Ermüdungserscheinungen bedingen. Die vorherrschende Windgeschwindigkeit kann hierbei bspw. durch ein Anemometer auf der Windenergieanlage oder durch eine andere Methode erfasst werden.

Außerdem wird vorgeschlagen, dass der jeweilige Blattwinkel der Rotorblätter umlaufzyklisch so verstellt wird, dass durch das Höhenprofil des Windes bedingte Wechsellasten reduziert werden. Der Blattwinkel bezeichnet hierbei den Anstellwinkel der Rotorblätter, der auch als Pitchwinkel bezeichnet wird. Der Blattwinkel kann dabei insbesondere so verstellt werden, dass er im oberen Bereich der Rotorfläche etwas aus dem Wind und im unteren Bereich der Rotorfläche etwas in den Wind verstellt wird. Dies soll insbesondere umlaufzyklisch erfolgen, also nicht basierend auf ständigen Messungen und daher möglichst nicht in der Form einer Regelung, sondern durch feste Werte, die jeder Umlaufposition oder Bereichen der Umlaufposition jedes Blattes zugeordnet sind. Dabei kann diese Zuordnung weitere Parameter wie vorherrschende Windgeschwindigkeit, Ortsabhängigkeit, Windrichtung, Jahres- und Tageszeit berücksichtigen. Ein ständiges Messen der Blattbelastung, wie bspw. durch eine Messung der Blattbiegung, kann unterbleiben. Entsprechend werden auch etwaige Stabilitätsprobleme durch eine Regelung vermieden, obwohl die Verwendung einer Regelung auch eine Option der Umsetzung sein kann.

Die Reduzierung der Wechsellasten durch eine umlaufzyklische Verstellung des Blattwinkels der Blätter kann sich an vorher aufgenommenen Messwerten, oder vorher berechneten Werten oder an Erfahrungswerten dieser oder anderer Anlagen orientieren. Entsprechend erfolgt eine individuelle Einstellung des Blattwinkels für jedes Rotorblatt einzeln. Die individuelle Einstellung kann dabei so erfolgen, dass für jedes Blatt eine identische, aber von einem zum nächsten Blatt um 120° verschobene Einstellfunktionen verwendet wird, wenn die Windenergieanlage bspw. drei Rotorblätter aufweist. Wichtig hierbei ist, dass jedes Rotorblatt über einen eigenen Rotorblattverstellmechanismus verfügt.

Gemäß einer Ausführungsform wird vorgeschlagen, dass der Blattwinkel umlaufzyklisch so verstellt wird, dass der Anströmwinkel möglichst konstant gehalten wird. Dies wird entsprechend für jedes Rotorblatt einzeln vorgeschlagen. Der Anströmwinkel ist hierbei derjenige, mit dem der scheinbare Wind das Rotorblatt dort an der Blattspitze anströmt. Statt der Blattspitze oder zusätzlich dazu kann auch ein Bereich im äußeren Drittel des Rotorblattes zugrunde gelegt werden, insbesondere bei 70%, 75%, 80% oder einem Bereich zwischen 70% bis 80% der Rotorblattlänge, gemessen von der Rotorachse. Der scheinbare Wind ist hierbei die vektorielle Addition des wahren Windes mit dem Bewegungsgegenwind, der durch die Drehung des Rotors und damit der Bewegung der Blattspitze vorliegt. Dieser scheinbare Wind ändert sich, wie eingangs beschrieben, mit der Höhe sowohl hinsichtlich seiner Amplitude als auch hinsichtlich seines Winkels. Es wird vorgeschlagen, das Blatt so zu drehen, dass es sich im Bereich seiner Blattspitze der Richtung des scheinbaren Windes jeweils anpasst. Das Rotorblatt wird somit in der 12-Uhr-Stellung, wenn das Rotorblatt also senkrecht nach oben steht, etwas stärker in den Wind gedreht, als wenn es sich in 6-Uhr-Position befindet, also ganz unten steht. Die Zwischenwerte ergeben sich entsprechend. Hierdurch ergibt sich nicht nur eine strömungstechnisch wünschenswerte Anpassung oder Teilanpassung an die Richtung des scheinbaren Windes, sondern die stärkere Verdrehung in den Wind beim Rotorblatt in 12-Uhr-Stellung, also allgemein gesprochen im oberen Bereich, bedingt auch eine bessere Belastungsaufnahme des Rotorblattes.

Eine weitere Ausgestaltung der Erfindung schlägt vor, dass der Blattwinkel jedes Rotorblattes abhängig von seiner jeweiligen Umlaufposition um jeweils vorbestimmte Werte verstellt wird, wobei insbesondere die vorbestimmten Werte vorab in einer Tabelle aufgenommen wurden und/oder durch eine von der Umlaufposition abhängige Funktion vorgegeben werden. Somit wird eine Steuerung des Blattwinkels jedes Rotorblattes einzeln abhängig von der jeweiligen Umlaufposition dieses Rotorblattes vorgeschlagen. Die Position des Rotors und damit zumindest nach einfacher Umrechnung die Position jedes Rotorblattes ist beim Betrieb einer Windenergieanlage häufig bekannt oder auf einfache Art und Weise ermittelbar. Davon ausgehend wird jeder Rotorblattwinkel gemäß vorbestimmter Werte verstellt, ohne dass es irgendeiner Messung bedarf. Die vorbestimmten Werte können in einer Tabelle hinterlegt sein, die vorab aufgenommen oder berechnet oder durch eine Simulation erstellt wurde. Eine solche Tabelle kann auch weitere Parameter wie bspw. die Windgeschwindigkeit oder windrichtungsabhängige, standortbezogene Höhenprofile berücksichtigen.

Eine andere oder ergänzende Variante ist, diese umlaufzyklische Blatteinstellung basierend auf einer Funktion vorzugeben. Bspw. können die Rotorblattwinkel $\alpha_1$, $\alpha_2$ und $\alpha_3$ für das Beispiel einer Windenergieanlage mit drei Rotorblättern durch folgende Funktionen vorgegeben werden:

$$\alpha_1 = \alpha_N + \cos(\beta) \cdot \alpha_A$$

$$\alpha_2 = \alpha_N + \cos(\beta + 120°) \cdot \alpha_A$$

$$\alpha_3 = \alpha_N + \cos(\beta + 240°) \cdot \alpha_A$$

Hierin beschreibt $\alpha_N$ einen berechneten oder vorgegebenen Blattwinkel, der wie im Stand der Technik üblich berechnet wird, nämlich ohne Berücksichtigung eines Windhöhenprofils. Der Winkel $\beta$ beschreibt die Umlaufposition des Rotorblattes, wobei $\beta$ = 0° einer 12-Uhr-Position des betreffenden Rotorblattes entspricht. $\alpha_A$ ist der Blattausgleichswinkel.

Vorzugsweise wird der Blattwinkel einzeln und abhängig der vorherrschenden Windgeschwindigkeit gesteuert, insbesondere so, dass er abhängig von der vorherrschenden Windgeschwindigkeit und der Umlaufposition des jeweiligen Rotorblatts gesteuert wird. Die Berücksichtigung beider Einflussgrößen kann beispielsweise durch eine zweidimensionale Tabelle vorgenommen werden, die entsprechende Blattwinkel aufweist, die in Abhängigkeit der Umlaufposition und des vorherrschenden Windes eingetragen sind. Eine andere Möglichkeit besteht darin, dass eine Berechnung gemäß obiger Gleichungen erfolgt, wobei der Ausgleichswinkel $\alpha_A$ von der vorherrschenden Windgeschwindigkeit abhängt und abhängig von dieser bspw. über eine entsprechende Funktion oder über vorher festgelegte Tabellenwerte eingestellt wird, um nur zwei Beispiele zu nennen.

Vorzugsweise wird somit, wie oben bereits angedeutet wurde, im Betrieb ein gemeinsamer Normalrotorblattwinkel für alle Rotorblätter vorgegeben und jedes einzelne Rotorblatt abhängig von seiner Umlaufposition um diesen einen Normalrotorblattwinkel herum variiert, insbesondere innerhalb eines vorgegebenen Blattwinkelintervalls. Eine Möglichkeit dies auszuführen ist die Verwendung der oben angegebenen Gleichungen, demnach der Rotorblattwinkel um den Ausgleichswinkel $\pm$ $\alpha_A$ variiert. Entsprechend findet bei dem Beispiel eine Variation innerhalb des Intervalls $[\alpha_N - \alpha_A; \alpha_N + \alpha_A]$ statt.

Es wird gemäß einer noch weiteren Ausführungsform vorgeschlagen, dass die Windenergieanlage in einem von einem Normalbetriebspunkt abweichenden Profilbetriebspunkt arbeitet. Der Normalbetriebspunkt ist hierbei, insbesondere im Teillastbereich, einer, der einen für den vorherrschenden Wind, aber ohne Berücksichtigung eines Windprofils ausgelegten Normalblattwinkel aufweist und außerdem eine Normalausrichtung der Azimutposition aufweist, bei der die Windenergieanlage genau in den Wind gedreht ist. Der Profilbetriebspunkt sieht eine um den Azimutausgleichswinkel von der Normalausrichtung abweichende Profilazimutposition vor. Außerdem sieht er einen von dem Normalblattwinkel um einen Blattausgleichswinkel abweichenden Profilblattwinkel vor. Es wird somit vorgeschlagen, eine Verstellung der Azimutposition und des Blattwinkels zu kombinieren, also zugleich vorzunehmen, um eine Belastung zu reduzieren.

Vorzugsweise wird ein erster Profilbetrieb ausgewählt, bei dem der Blattausgleichwinkel dem Azimutausgleichswinkel bezogen auf eine 12-Uhr Position des betreffenden Rotorblattes entgegen gerichtet ist. In der 12 Uhr-Stellung ist das Rotorblatt somit gegenüber einem Normalbetrieb nur wenig verstellt, weil sich die beiden Winkel hier zumindest teilweise aufheben. Es ist zu Beachten, dass das Verstellen des Azimutwinkels und des Rotorblattwinkels zu unterschiedlichen Effekten führen kann, so dass trotz der teilweisen Aufhebung eine für die Belastung positiv wirkende Synergie erzielt werden kann. Gemäß einer anderen Ausführung wird ein zweiter Profilbetrieb vorgeschlagen, bei dem der Blattausgleichwinkel und der Azimutausgleichswinkel das Rotorblatt bezogen auf eine 12-Uhr Position des betreffenden Rotorblattes in dieselbe Richtung verstellen. Demnach erhöht hier die Kombination beider Winkel den effektiv in der 12-Uhr-Stellung verstellten Blattwinkel. Auch diese positive Überlagerung der beiden Winkelverstellungen kann zu einer Belastungsreduzierenden Synergie führen.

Erfindungsgemäß wird zwischen dem Azimutausgleichswinkel und dem Blattausgleichswinkel eine Gewichtung vorgenommen, so dass der Betrag des Azimutausgleichswinkels um einen Azimut-Gewichtungsfaktor größer als der Betrag des Blattausgleichswinkels ist, oder der Betrag des Blattausgleichswinkels um einen Blatt-Gewichtungsfaktor größer als der Betrag des Azimutausgleichswinkels ist, wobei der Azimut-Gewichtungsfaktor und der Blatt-Gewichtungsfaktor jeweils größer als 1,2, vorzugsweise größer als 1,5 und insbesondere größer als 2 sind. Es wird somit darauf geachtet, dass bezogen auf eine 12-Uhrstellung die beiden Verstellwinkel, also der Azimutausgleichswinkel und der Blattausgleichswinkel, unterschiedliche Werte aufweisen. Es wird insbesondere vermieden, dass sich bezogen auf eine 12-Uhr-Stellung effektiv keine Blattverstellung einstellt.

Es wird somit ein Verfahren vorgeschlagen, das Probleme durch ein Windhöhenprofil dadurch löst oder verringert, dass die Azimutposition der Windenergieanlage verstellt wird und zusätzlich oder optional umlaufzyklisch das Rotorblatt in seinem Blattwinkel verstellt wird. Ein Windhöhenprofil kann zu einer Variation des Anströmwinkels am Rotorblatt, abhängig von der Position des Rotorblattes führen. Der Differenzwinkel führt zu unterschiedlichen Auftriebsbeiwerten.

Das konkrete Windhöhenprofil kann auch orts-, richtungs- und jahreszeitabhängig sein und die vorgeschlagenen Ausgleichsmaßnahmen können vom konkreten Höhenprofil abhängen.. Vorzugsweise wird vorgeschlagen, die Azimuteinstellung und/oder die Blatteinstellung in Abhängigkeit dieses Höhenprofils vorzunehmen. Insbesondere wird vorgeschlagen, die Azimutausgleichswinkel abhängig von dem Höhenprofil auszuwählen und außerdem oder alternativ den Blattausgleichswinkel abhängig von dem Höhenprofil auszuwählen.

Für eine umlaufzyklische Veränderung des Blattwinkels jedes Rotorblattes wird insbesondere vorgeschlagen, dass diese abhängig von einer kontinuierlichen Kurve erfolgt, wobei diese Kurve bzw. Kennlinie im Grunde kontinuierlich für jede Position eines Umlaufs des betreffenden Rotorblattes einen Rotorblattwinkel vorgibt.

Die Hinterlegung entsprechender Werte in einer Tabelle und/oder Berücksichtigung in einem funktionalen Zusammenhang erfolgt vorzugsweise auch orts-, jahreszeit-, richtungs- und höhenabhängig und/oder Abhängig der vorherrschenden Turbulenzen.

Solche vorab aufgenommenen Werte, sei es in einer Tabelle, in einem funktionalen Zusammenhang oder auf andere Art und Weise, können außerdem oder alternativ vor Ort bspw. messtechnisch angepasst werden, insbesondere eine adaptive Anpassung wird hier vorgeschlagen.

Nachfolgend wird die Erfindung anhand von Ausführungsbeispielen unter Bezugnahme auf die begleitenden Figuren beispielhaft näher erläutert.

Fig. 1 zeigt eine Windenergieanlage schematisch in einer perspektivischen Darstellung.

Fig. 2 zeigt ein beispielhaftes Höhenprofil des Windes in Bezug auf eine schematisch dargestellte Windenergieanlage.

Fig. 3 zeigt in einem Diagramm beispielhaft einen umlaufwinkelabhängigen Anstellwinkel bzw. Anströmwinkel einschließlich Kompensation eines Rotorblattes.

Fig. 4 zeigt beispielhaft einen umlaufwinkelabhängigen lokalen Anstellwinkel bzw. Anströmwinkel in einem Diagramm für verschiedene Azimuteinstellungen.

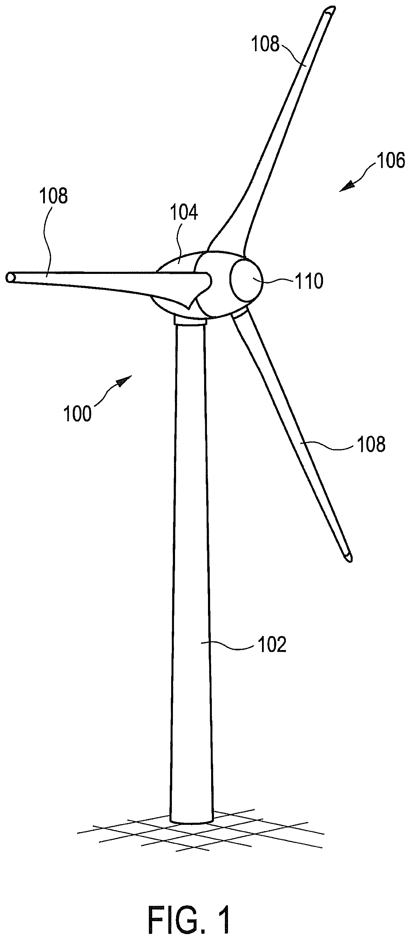

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

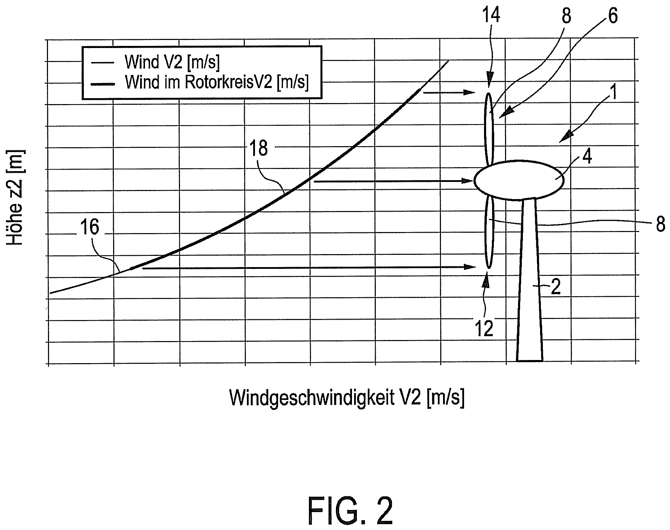

Fig. 2 bis 4 legen vereinfachend berechnete bzw. simulierte Werte zugrunde.

Fig. 2 legt eine beispielhafte Windenergieanlage 1 mit einer Nabenhöhe von etwa 85 m zugrunde. Die Windenergieanlage weist eine Gondel 4 mit einem Rotor 6 mit Rotorblättern 8 auf. Dabei steht die Windenergieanlage 1 mit ihrem Turm 2 auf einem Boden, dessen Höhe als 0 m angesetzt wird und damit die Bezugsgröße für die Höhe bildet.

Die Rotorblätter 8 überstreichen dabei ein Rotorfeld, das durch einen Rotorkreis begrenzt ist, und das von einer niedrigsten Höhe 12 von 44 m auf eine höchste Höhe 14 von etwa 126 m reicht.

Weiterhin ist ein Höhenprofil des Windes 16 angezeigt, das die Windgeschwindigkeit V2 in Abhängigkeit der Höhe z2 zeigt. Dabei wird die Windgeschwindigkeit V2 in [m/s] an der Abszisse und die Höhe z2 mit der Einheit [m] an der Ordinate angegeben. Der Höhenprofilteil 18, der innerhalb des Rotorkreises, also zwischen der niedrigsten Höhe 12 und der höchsten Höhe 14 angeordnet ist, ist in Fig. 2 fett dargestellt.

Die Windgeschwindigkeit reicht somit von der niedrigsten Höhe 12 zur höchsten Höhe 14, wobei sie auf Höhe der niedrigsten Höhe 12 einen Wert von etwas mehr als 7 m/s annimmt. Bei der höchsten Höhe 14 hat die Windgeschwindigkeit etwa den Wert 11,6 m/s erreicht. Hier ergibt sich also ein Höhenkoeffizient von etwa 1,6 .

Das Diagramm der Fig. 2 zeigt dabei ein Höhenprofil des Windes mit einem Höhenexponenten von a=0,5.

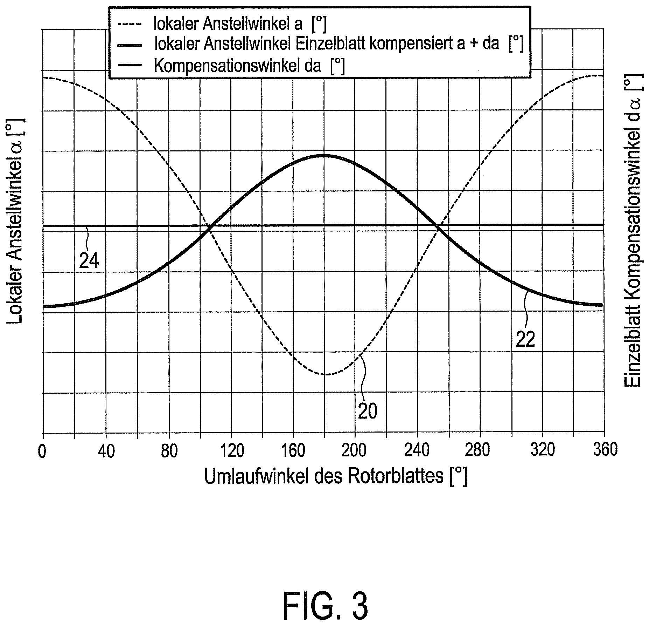

Zu dem in Fig. 2 veranschaulichten Beispiel des Windhöhenprofils und der Windenergieanlage 1 zeigt Fig. 3 abhängig vom Umlaufwinkel des betreffenden Rotorblattes den lokalen Anstellwinkel, nämlich den tatsächlichen Anstellwinkel zum jeweils dort vorhandenen, bzw. rechnerisch angenommenen scheinbaren Wind. An der Abszisse des Diagramms ist der Umlaufwinkel des Rotorblattes in Grad angegeben, wobei 0° bzw. 360° einer 12-Uhr-Stellung des Rotorblattes entspricht. Der lokale Anstellwinkel 20, der nämlich den Anströmwinkel zum jeweils vorhandenen bzw. rechnerisch angenommenen scheinbaren Wind angibt, verändert sich von 9,4° bei der 12-Uhr-Stellung bis zu 5,7° bei der 6-Uhr-Stellung, die entsprechend bei einem Umlaufwinkel von 180° liegt. Die Winkel des lokalen Anstellwinkels sind beispielhaft in dem Diagramm an der linken Ordinate angezeichnet.

Es wird nun vorgeschlagen, den Rotorblattwinkel abhängig von dem Umlaufwinkel des Rotorblattes so zu verstellen, dass der lokale Anstellwinkel möglichst einen konstanten Wert annimmt, dass also möglichst über den gesamten Umlaufkreis, also für das gesamte Spektrum von 0 bis 360° des Umlaufwinkels des Rotorblattes der Anströmwinkel konstant ist. Hierzu wird gemäß einer Ausführung vorgeschlagen, einen Einzelblattkompensationswinkel 22 aufzuschalten, der auch als Blattausgleichswinkel bezeichnet werden kann. Der Blattkompensationswinkel 22 variiert über den Umlaufwinkel des Rotorblattes etwa von -1,8 bis +1,8° und seine Werte sind in dem Diagramm entsprechend dem Verlauf aus Fig. 3 in der rechten Ordinate eingetragen. Es ist zu beachten, dass die Skalierung des Blattkompensationswinkels gemäß der rechten Ordinate sich um Faktor 2 von der Skalierung des lokalen Anstellwinkels gemäß der linken Ordinate unterscheidet. Durch die Aufschaltung dieses Blattkompensationswinkels 22 kann der lokale Anstellwinkel idealerweise so kompensiert werden, dass er einen Mittelwert als konstanten Wert annehmen kann, wobei der konkrete Wert natürlich von den konkreten Randbedingungen insbesondere der konkreten Windenergieanlage abhängt. Der kompensierte lokale Anstellwinkel 24 ist entsprechend in dem Diagramm der Fig. 3 als Waagerechte eingetragen. Das Ergebnis eines exakten, konstanten, kompensierten, lokalen Anstellwinkels ist auf mathematischem Wege ermittelbar und kann in der Realität variieren.

Die Variation des Anströmwinkels am Rotorblatt aufgrund des Windhöhenprofils kann auch als Fluktuation des lokalen Anstellwinkels am Rotorblatt bezeichnet werden und soll verringert oder möglichst ganz verhindert werden. Bei ortsfesten Rotorblättern an der Rotornabe einer Windenergieanlage entsteht also im Betrieb eine Fluktuation des lokalen Anstellwinkels, die durch die Kennlinie 20 des lokalen Anstellwinkels gezeigt ist. Wird jedes einzelne Rotorblatt in geeigneter Weise in seinem Rotorblattwinkel verstellt, was allgemein auch als gepitcht bezeichnet wird, wie die Blattkompensationswinkelkurve 22 verdeutlicht, dann lässt sich die Anstellwinkelfluktuation kompensieren. Damit erhält man für diesen Rotorradius einen vollkommen gleichmäßigen idealen Anstellwinkel an jeder Position des umlaufenden Blattes, was die Kurve 24 darstellt, die den kompensierten Anstellwinkel zeigt. Hierdurch können Lasten und auch Schall reduziert werden. Durch eine solche Vergleichmäßigung des Anstellwinkels und damit der Anströmung des Rotorblattes kann das Blatt stärker in den Wind hineingedreht bzw. gepitcht werden, so dass der Ertrag erhöht wird.

Das Diagramm der Fig. 3 zeigt dabei ein Beispiel für eine Windenergieanlage mit Kompensation der Anstellwinkelfluktuation bei einer mittleren Windgeschwindigkeit auf Höhe der Nabe 4. von etwa 10 m/s und einer Blattspitzengeschwindigkeit von $v_{Tip}$=78 m/s. Der lokale Anstellwinkel 20 bezieht sich dabei auf einen Radius von 35,5 m.

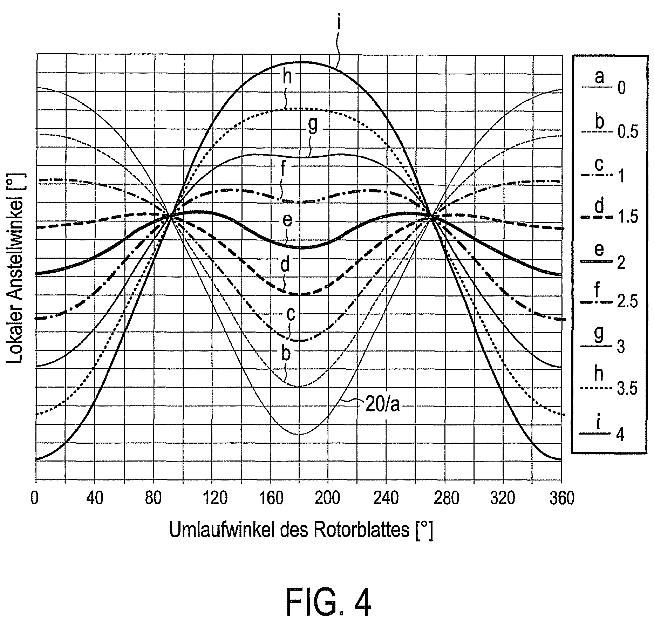

Fig. 4 verdeutlicht eine optionale oder zusätzliche Möglichkeit, eine Vergleichmäßigung des lokalen Anstellwinkels bzw. Anströmwinkels des scheinbaren Windes zu erreichen. Die Fig. 4 zeigt den lokalen Anstellwinkel 20 für eine Azimutposition, bei der die Gondel 4 (gemäß Fig. 2) genau in den Wind gerichtet ist. Diese Kurve ist auch mit dem Buchstaben a gekennzeichnet und entspricht dem lokalen Anstellwinkel 20 der Fig. 3. Auch hier liegt eine Windenergieanlage 1 und ein Windhöhenprofil gemäß Fig. 3 zugrunde. Wie in Fig. 3 wird auch hier der lokale Anstellwinkel 20 über den Umlaufwinkel des Rotorblattes abgetragen, der an der Abszisse mit Werten von 0 bis 360° eingezeichnet ist.

Rechts neben dem Diagramm findet sich eine Legende für die Azimutablagen von der Windenergieanlage, nämlich von a bis i, wobei a den lokalen Anstellwinkel 20 für eine Azimutposition beschreibt, die genau in den Wind weist und somit gegenüber dieser um 0° verstellt ist. Es sind weitere Verläufe des lokalen Anstellwinkels für Abweichungen der Azimutstellung Kurve b bis hin zu Kurve i dargestellt. Hierbei zeigt sich, dass die Kurve e insgesamt die geringste Schwankung oder Fluktuation aufweist, nämlich in der 12-Uhr-Stellung bis etwa einer 10-Uhr-Stellung bzw. einer 2-Uhr-Stellung. Die Kurve e gehört bei diesem Beispiel zu einer Verstellung der Azimutpositon. So kann durch eine einfache Verstellung des Azimutwinkels, insbesondere konstant um eine signifikante Vergleichmäßigung des lokalen Anstellwinkels und damit eine signifikante Vergleichmäßigung der Lasten am Rotorblatt erreicht werden. Vorteilhaft ist es somit, einen konstanten Offset-Winkel, also einen konstanten Korrektur- oder Ausgleichswinkel für die Azimutposition vorzusehen.

Es wird somit die Gondel und damit die Rotorachse der Windenergieanlage im Uhrzeigersinn, von oben auf die Anlage betrachtet, um den Azimutwinkel, nämlich insbesondere den Azimutausgleichswinkel verdreht. Die lokalen Anstellwinkel am Rotorblatt vergleichmäßigen sich in ihrem Wert gegenüber der Gondelausrichtung mit Rotorachse in Windrichtung. Die Fluktuation des lokalen Anstellwinkels nimmt damit deutlich ab, wenn zwischen Rotorachse und Windrichtung ein Offset im Azimutwinkel hergestellt wird.

Auch durch diese Maßnahme werden Lasten und Schall reduziert. Wenn hierdurch der Anstellwinkel und die Anströmung des Rotorblattes wie beschrieben vergleichmäßigt werden, kann das Blatt stärker in den Wind hineingedreht werden, so dass der Ertrag erhöht wird.

**Patentansprüche**

1. Verfahren zum Betreiben einer Windenergieanlage (1) mit einem Rotor (6) mit Rotorblättern (8) mit einer im Wesentlichen horizontalen Drehachse zum Erzeugen elektrischer Energie aus Windenergie, wobei

   - die Windenergieanlage (1) so ausgerichtet wird, dass die Azimutposition der Windenergieanlage (1) von einer Ausrichtung in den Wind (16) um einen Azimutausgleichswinkel abweicht, und
   - der Blattwinkel der Rotorblätter (8) umlaufzyklisch so verstellt wird, dass durch ein Höhenprofil des Windes (16) bedingte Wechsellasten reduziert werden,
   **dadurch gekennzeichnet, dass** die Windenergieanlage (1) in einem von einem Normalbetriebspunkt abweichenden Profilbetriebspunkt arbeitet, wobei
   - der Normalbetriebspunkt, insbesondere im Teillastbereich, einen für den vorherrschenden Wind (16), aber ohne Berücksichtigung eines Windprofils ausgelegten Normalblattwinkel aufweist und eine Normalausrichtung der Azimutposition in den Wind (16) vorsieht und
   - der Profilbetriebspunkt eine um den Azimutausgleichswinkel von der Normalausrichtung abweichende Profilazimutposition vorsieht und einen von dem Normalblattwinkel um einen Blattausgleichswinkel abweichenden Profilblattwinkel aufweist, und
   zwischen dem Azimutausgleichswinkel und dem Blattausgleichswinkel eine Gewichtung vorgenommen wird, so dass der Betrag des Azimutausgleichswinkels um einen Azimut-Gewichtungsfaktor größer als der Betrag des Blattausgleichswinkels ist, oder der Betrag des Blattausgleichswinkels um einen Blatt-Gewichtungsfaktor größer als der Betrag des Azimutausgleichswinkels ist, wobei der Azimut-Gewichtungsfaktor und der Blatt-Gewichtungsfaktor jeweils größer als 1,2, vorzugsweise größer als 1,5 und insbesondere größer als 2 sind.

2. Verfahren nach Anspruch 1, **dadurch gekennzeichnet, dass** die Windenergieanlage (1) bezogen auf eine Sicht von der Windenergieanlage (1) zum Wind (16) nach rechts von der Ausrichtung in den Wind (16) abweicht bzw. in Ihrer Azimutposition bezogen auf eine Sicht von oben auf die Windenergieanlage (1) im Uhrzeigersinn zu der Ausrichtung in den Wind (16) abweicht.

3. Verfahren nach Anspruch 1 oder Anspruch 2, **dadurch gekennzeichnet, dass** der Azimutausgleichswinkel 0,5 bis 10°, vorzugsweise 1 bis 3,5°, insbesondere 1,5 bis 2,5° beträgt und/oder dass der Azimutausgleichswinkel als konstanter Offset-Winkel vorgesehen ist, um die Windenergieanlage immer um diesen Azimutausgleichswinkel gegenüber einer Ausrichtung in den Wind (16) zu verstellen.

4. Verfahren nach einem der vorstehenden Ansprüche, **dadurch gekennzeichnet, dass** der Azimutausgleichswinkel abhängig der vorherrschenden Windgeschwindigkeit (V2) gewählt wird.

5. Verfahren nach einem der vorstehenden Ansprüche, **dadurch gekennzeichnet, dass** jeder der Blattwinkel jeweils umlaufzyklisch so verstellt wird, dass im Bereich der Blattspitze ein Anströmwinkel möglichst konstant gehalten wird.

6. Verfahren nach einem der vorstehenden Ansprüche, **dadurch gekennzeichnet, dass** der Blattwinkel jedes Rotorblattes abhängig seiner jeweiligen Umlaufposition um jeweils vorbestimmte Werte verstellt wird, wobei insbesondere die vorbestimmten Werte vorab in einer Tabelle aufgenommen wurden und/oder durch eine von der Umlaufposition abhängige Funktion vorgegeben werden.

7. Verfahren nach einem der vorstehenden Ansprüche, **dadurch gekennzeichnet, dass** der Blattwinkel jedes Rotorblattes einzeln und abhängig der vorherrschenden Windgeschwindigkeit (V2) gesteuert wird, insbesondere, dass er abhängig von der vorherrschenden Windgeschwindigkeit (V2) und der Umlaufposition des jeweiligen Rotorblattes gesteuert wird.

8. Verfahren nach einem der vorstehenden Ansprüche, **dadurch gekennzeichnet, dass** im Betrieb ein gemeinsamer Normalrotorblattwinkel für alle Rotorblätter (8) vorgegeben wird und jedes einzelne Rotorblatt abhängig von seiner Umlaufposition um diesen einen Normalrotorblattwinkel herum variiert wird, insbesondere innerhalb eines vorgegebenen Blattwinkelintervalls.

9. Verfahren nach Anspruch 1, **dadurch gekennzeichnet, dass**

- ein erster Profilbetrieb ausgewählt wird, bei dem der Blattausgleichwinkel dem Azimutausgleichswinkel bezogen auf eine 12-Uhr Position des betreffenden Rotorblattes entgegen gerichtet ist, oder dass
- ein zweiter Profilbetrieb ausgewählt wird, bei dem der Blattausgleichwinkel und der Azimutausgleichswinkel das Rotorblatt bezogen auf eine 12-Uhr Position des betreffenden Rotorblattes in dieselbe Richtung verstellen.

10. Windenergieanlage (1) mit einem Rotor (6) mit Rotorblättern (8) mit einer im Wesentlichen horizontalen Drehachse zum Erzeugen elektrischer Energie aus Windenergie, wobei die Windenergieanlage (1) dazu vorbereitet ist, mit einem Verfahren nach einem der vorstehenden Ansprüche betrieben zu werden.

## Claims

1. Method for operating a wind turbine (1) having a rotor (6) with rotor blades (8) and an essentially horizontal rotation axis for generating electrical energy from wind energy, with

- such wind turbine (1) being aligned such that the azimuth position of the wind turbine (1) departs by an azimuth adjustment angle from an alignment into the wind (16), and
- the rotor blade angle of the rotor blades (8) being adjusted in cyclic rotation such as to reduce alternating loads that are caused by a height profile of the wind (16),

**characterized in that** the wind turbine (1) operates at a profile operating point that differs from a normal operating point, with

- such normal operating point featuring, in particular in the partial-load operational range - a normal blade angle that is designed for the prevailing wind (16), but without consideration of a wind profile, and moreover featuring a normal alignment of the azimuth position into the wind (16) and
- such profile operating point providing for a profile azimuth position that deviates by the azimuth adjustment angle from the normal alignment, and featuring a profile blade angle that deviates by a blade adjustment angle from the normal blade angle, and

a weighting is performed between the azimuth adjustment angle and the blade adjustment angle, so that the value of the azimuth adjustment angle is larger by one azimuth weighting factor than the value of the blade adjustment angle, or that the value of the blade adjustment angle is larger by one blade weighting factor than the value of the azimuth adjustment angle, whereby the azimuth weighting factor and the blade weighting factor are each larger than 1.2, preferably larger than 1.5 and, in particular, larger than 2.

2. Method according to Claim 1, **characterized in that** the wind turbine (1) departs to the right from the alignment into the wind (16) when looking from the wind turbine (1) in the direction of the wind (16), or, respectively, departs in its azimuth position clockwise to the alignment into the wind (16) when looking down onto the wind turbine (1).

3. Method according to Claim 1 or Claim 2, **characterized in that** the azimuth adjustment angle is 0.5 to 10°, preferably 1 to 3.5°, in particular 1.5 to 2.5° and/or that the azimuth adjustment angle is provided as a constant offset angle, in order to always adjust the wind turbine by such azimuth adjustment angle as compared to an alignment into the wind (16).

4. Method according to one of the above Claims, **characterized in that** the azimuth adjustment angle is selected based on the prevailing wind speed (V2).

5. Method according to one of the above Claims, **characterized in that** each one of the blade angles is adjusted in cyclic rotation such that an angle of incidence is kept as constant as possible in the area of the blade tip.

6. Method according to one of the above Claims, **characterized in that** the blade angle of each rotor blade is adjusted by predetermined values, depending on its respective cycle position, whereby, in particular, the predetermined values have been previously recorded in a table and/or are provided by a function that depends on the cycle position.

7. Method according to one of the above Claims, **characterized in that** the blade angle of each rotor blade is controlled individually and depending on the prevailing wind speed (V2), in particular that it is controlled depending on the prevailing wind speed (V2) and cycle position of the respective rotor blade.

8. Method according to one of the above Claims, **characterized in that** a common normal rotor blade angle is specified for all rotor blades (8) when in operation, and every single rotor blade is varied around such single normal rotor blade angle depending on its cycle position, in particular within a specified blade angle interval.

9. Method according to Claim 1, **characterized in that**

- a first profile operation is selected, where the blade adjustment angle - based on a 12 o'clock position of the respective rotor blade - is opposite the azimuth adjustment angle, or
- a second profile operation is selected, where the blade adjustment angle and azimuth adjustment angle adjust the rotor blade in the same direction in relation to a 12 o'clock position of the respective rotor blade.

10. Wind turbine (1) having a rotor (6) with rotor blades (8) and an essentially horizontal rotation axis for generating electrical energy from wind energy, whereby the wind turbine (1) is prepared to be operated with a method according to one of the above Claims.

**Revendications**

1. Procédé permettant de faire fonctionner une éolienne (1) avec un rotor (6) avec des pales de rotor (8) avec un axe de rotation sensiblement horizontal pour la génération d'énergie électrique de l'énergie éolienne, dans lequel

- l'éolienne (1) est orientée de sorte que la position azimutale de l'éolienne (1) diverge d'une orientation dans le vent (16) d'un angle de compensation azimutal, et
- l'angle de pale des pales de rotor (8) est réglé selon un cycle de rotation de sorte que des charges alternatives dues à un profil vertical du vent (16) soient réduites,

**caractérisé en ce que** l'éolienne (1) travaille dans un point de fonctionnement de profil divergeant d'un point de fonctionnement normal, dans lequel

- le point de fonctionnement normal, en particulier dans la zone de charge partielle, présente un angle de pale normal conçu pour le vent (16) prédominant mais sans tenir compte d'un profil de vent et prévoit une orientation normale de la position azimutale dans le vent (16) et
- le point de fonctionnement de profil prévoit une position azimutale de profil divergeant de l'angle de compensation azimutal de l'orientation normale et présente un angle de pale de profil divergeant de l'angle de pale normal d'un angle de compensation de pale, et

une pondération est entreprise entre l'angle de compensation azimutal et l'angle de compensation de pale de sorte que la valeur de l'angle de compensation azimutal soit supérieure d'un facteur de pondération azimutal à la valeur de l'angle de compensation de pale, ou la valeur de l'angle de compensation de pale soit supérieure d'un facteur de pondération de pale à la valeur de l'angle de compensation azimutal, dans lequel le facteur de pondération azimutal et le facteur de pondération de pale sont respectivement supérieurs à 1,2, de préférence supérieurs à 1,5 et en particulier supérieurs à 2.

2. Procédé selon la revendication 1, **caractérisé en ce que** l'éolienne (1) diverge par rapport à une vue de l'éolienne (1) vers le vent (16) vers la droite de l'orientation dans le vent (16) ou diverge dans sa position azimutale par rapport à une vue de dessus sur l'éolienne (1) dans le sens horaire par rapport à l'orientation dans le vent (16).

3. Procédé selon la revendication 1 ou la revendication 2, **caractérisé en ce que** l'angle de compensation azimutal est de 0,5 à 10°, de préférence de 1 à 3,5°, en particulier de 1,5 à 2,5° et/ou que l'angle de compensation azimutal est prévu en tant qu'angle de déport constant afin de régler l'éolienne toujours de cet angle de compensation azimutal par rapport à une orientation dans le vent (16).

4. Procédé selon l'une quelconque des revendications précédentes, **caractérisé en ce que** l'angle de compensation azimutal est choisi en fonction de la vitesse du vent (V2) prédominante.

5. Procédé selon l'une quelconque des revendications précédentes, **caractérisé en ce que** chacun des angles de pales est réglé respectivement selon un cycle de rotation de sorte que, dans la zone de la pointe de pale, un angle d'afflux soit maintenu le plus constant possible.

6. Procédé selon l'une quelconque des revendications précédentes, **caractérisé en ce que** l'angle de pale de chaque pale de rotor est réglé en fonction de sa position de rotation respective de valeurs respectivement prédéterminées, dans lequel en particulier les valeurs prédéterminées ont été enregistrées au préalable dans un tableau et/ou sont prédéfinies par une fonction dépendant de la position de rotation.

7. Procédé selon l'une quelconque des revendications précédentes, **caractérisé en ce que** l'angle de pale de chaque pale de rotor est commandé individuellement et en fonction de la vitesse du vent (V2) prédominante, en particulier qu'il est commandé en fonction de la vitesse du vent (V2) prédominante et de la position de rotation de la pale de rotor respective.

**8.** Procédé selon l'une quelconque des revendications précédentes, **caractérisé en ce que**, en fonctionnement, un angle de pale de rotor normal commun pour toutes les pales de rotor (8) est prédéfini et chaque pale de rotor individuelle est variée en fonction de sa position de rotation autour de cet un angle de pale de rotor normal, en particulier dans un intervalle d'angle de pale prédéfini.

**9.** Procédé selon la revendication 1, **caractérisé en ce que**

- un premier fonctionnement de profil est sélectionné, pour lequel l'angle de compensation de pale est dirigé dans le sens inverse à l'angle de compensation azimutal par rapport à une position de 12 heures de la pale de rotor concernée, ou que
- un second fonctionnement de profil est sélectionné, pour lequel l'angle de compensation de pale et l'angle de compensation azimutal règlent la pale de rotor par rapport à une position de 12 heures de la pale de rotor concernée dans la même direction.

**10.** Eolienne (1) avec un rotor (6) avec des pales de rotor (8) avec un axe de rotation sensiblement horizontal pour la génération d'énergie électrique d'éolienne, dans laquelle l'éolienne (1) est préparée afin de fonctionner avec un procédé selon l'une quelconque des revendications précédentes.

EP 2 929 179 B1

FIG. 1

11

FIG. 2

FIG. 3

FIG. 4

**IN DER BESCHREIBUNG AUFGEFÜHRTE DOKUMENTE**

**In der Beschreibung aufgeführte Patentdokumente**

- US 6899523 B
- US 20100290916 A
- US 6899523 B2
- US 20100074748 A1
- US 20100078939 A1
- US 20100092288 A1
- US 20100290916 A1
- US 7118339 B2

**In der Beschreibung aufgeführte Nicht-Patentliteratur**

- **BOSSANYI, E. A.** Individual Blade Pitch Control for Load Reduction. *Wind Energy,* 2003, vol. 6, ISSN 1099-1824, 119-128